# NEW EUROPEAN PATENT SPECIFICATION

(11) **EP 0 082 611 B2**
(45) Date of publication and mention of the opposition decision: **27.10.1993**
(45) Mention of the grant of the patent: 12.11.1986
(21) Application number: 82306334.2
(22) Date of filing: 29.11.1982
(51) Int. Cl.: B60T 17/08, F16D 65/32

(54) **Air pressure operable diaphragm actuators**
Luftdruckbetätigtes Membran-Stellglied
Vérin à membrane actionné par air sous pression

(30) Priority: 02.12.1981 GB 8136344
(43) Date of publication of application: 29.06.1983
(73) Proprietor: BENDIX LIMITED, Kingswood, Bristol BS15 2NL (GB)
(72) Inventor: Dagger, Norman, Kingswood Bristol BS15 2NL (GB); Joseph, Ian, Kingswood Bristol BS15 2NL (GB)
(74) Representative: Turner, Alan Reginald

(56) References cited:
- DE-A- 2 751 607
- DE-B- 2 415 826
- DE-B- 2 744 292
- WABCO publication 470004 (edition May, 1969)
- "Handbuch der Dichtungstechnik" pages 191 - 201, expert Verlag Grafenau (DE)

## Description

The invention relates to air pressure operable actuators and relates especially but not exclusively to tube-mounted air pressure operable brake actuators.

Air pressure operable actuators for brakes are known wnicn comprise a housing with a diaphragm which divides the housing into a pressure chamber and a non-pressure chamber. When the pressure chamber has fluid pressure applied to it, the diaphragm acts upon an output rod via a push plate. It is usual moreover for the general alignment of the output rod to be provided for by gluing or otherwise attaching the diaphragm to the push plate but despite this provision, the alignment achieved thereby is by no means precise. Further, where such an actuator is required to operate in a hostile environment such as at the underside of a vehicle, it is desirable to prevent contamination which may enter the vented non-pressure chamber of the actuator from being communicated to the brake mechanism being actuated by the push rod.

In accordance with the invention there is provided an air pressure operable diaphragm actuator having a housing containing a pressure chamber one wall of which is formed by a diaphragm, a push plate co-operable with the diaphragm and a push rod connected thereto extending outwardly of the housing via the bore of a tube which is a fixed part of the housing and said push rod being slideably supported in said tube by a first non-sealing packing member and a second non-sealing packing member axially outwardly spaced from the first packing member said packing members providing alignment of the push rod in the tube and being located by annular grooves directly on the pus rod for axial movement therewith in the tube, characterised by said first packing member comprising a one-piece moulding incorporating material for self-lubrication and being provided with an axially extending solid portion of predetermined external diameter and said first member also known an annular resilient skirt-like scraping portion extending further axially inwardly of the solid portion with reducing thickness to a greater natural external diameter to slide non-sealingly in the tube and clearing the inward end of the tube in moving to the fully retracted position of the push rod to protect the packing members and the outward end of the tube against contaminants passing thereto from the actuator whilst avoiding pressure gradients during operation of the actuator.

In order that the invention may be more clearly understood and readily put into effect, the same will be further described for example with reference to the accompanying drawing of which:
Fig. 1 illustrates in sectional diagrammatic view an actuator in accordance with the invention and.
Fig. 2 illustrates on an enlarged scale a packing member for use in an ac:uator such as shown in Fig. 1.

Referring to Fig. this illustrates a diaphragm pneumatic actuator comprising a housing formed of a first part 1 and a second part 2 between which the peripheral bead 3 of a diaphragm 4 is clamped by a clamping ring 6. Welded into an aperture of the part 1 there is a tube 6 the inner end 7 of which extends inwardly of the actuator.

The outboard end 8 of the tube is welded to a mounting flange 9 whereby the assembly is mounted upon a brake mechanism. Within the actuator a push plate 10 is mounted on the inward end of a tubular push rod part 11 with an outward capping piece 12 mounted into the end of the tubular part by means of a short spigot 13. Between the end of the part 11 and the capping piece 12 suitable shims 14 are inserted to establish a predetermined clearance between the capping piece 12 and the inward end 15 of a rod 16 connected to a twin wedge (not shown) of a braking mechanism. In order to provide for alignment of the rod part 11 within the bore of the tube 6, the rod part 11 is provided with an annular groove 17 spaced from a similar outwardly positioned annular groove 18 provided in the capping piece 12. These annular grooves serve to locate an annular packing member 19 and an outwardly positioned packing member 20 relative to the rod part 11.

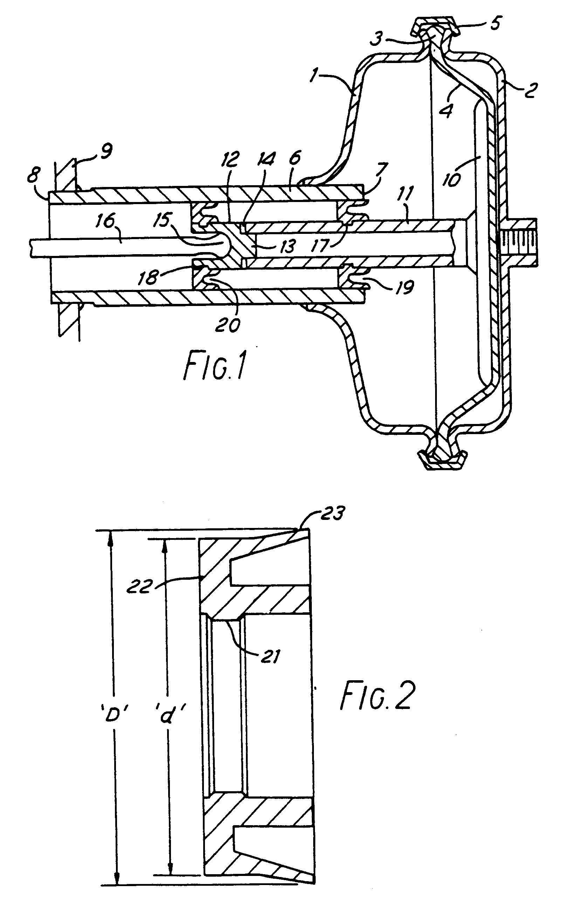

Referring to Fig. 2, one such packing member is shown on an enlarged scale and from this illustration it will be seen thatthe packing member 19 is designed firstly to be located on the rod by engagement of the inward annular projection 21 thereof with the respective annular groove 17 on the rod. Secondly, by virtue of the portion 22 of substantial thickness the packing member provides a locating action whereby the rod is positioned centrally within the bore of the tube. Thirdly, the packing member 19 is provided with an annular scraping part. by virtue of the radially outward directed reduced thickness portion 23 having a greater natural diameter 'D' than the diameter 'd' of the solid portion 22. This provides a scraping action within the bore of the tube to reduce the possibility of transmission of contaminants along the tube from the non-pressure chamber of the actuator to the operated brake mechanism. As seen in Fig. 1, the inriermost scraper portion 23 is such as to clear the end 7 of the tube in the fully retracted position of the actuator. The packing members are preferably formed of hard wearing resilient moulded material incorporating carbon granules for providing self lubrication and the life time of which is adequate in relation to specified service intervals for such actuators. The packing member 20 is substantially the same as member 19. In order to avoid the possibility of pressure gradients being set up during operation of the actuator, between the non-pressure chamber and the brake mechanism to the left of the packing member 20 the scraping portions 23 of the packing members 19 and 20 are arranged to be less than gas tight so that although they are effective to exclude contaminants they do not result in appreciable pumping action.

If it is not required to provide for adjustment of the effective length of the part rod, the capping piece 12 can be dispensed with and the length of the rod part correspondingly increased to a fixed nominal length. In such a case, the annular groove 18 in the capping piece will now be formed near the outward end of the rod part 11 for locating the packing member 20.

## Claims

1. An air pressure operable diaphragm actuator having a housing (1,2) containing a pressure chamber one wall of which is formed by a diaphragm, (4), a push plate (10) co-operable with the diaphragm (4) and a push rod (11, 12, 16) connected thereto extending outwardly of the housing via the bore of a tube (6) which is a fixed part of the housing and said push rod being slideably supported in said tube by a first- non-sealing packing member (19) and a second non-sealing packing member (20) axially outwardly spaced from the first packing member said packing members providing alignment of the push rod in the tube and being located by annular grooves directly on the push rod for axial movement therewith in the tube, characterised by said first packing member comprising a one-piece moulding incorporating material for self-lubrication and being provided with an axially extending solid portion (22) of predetermined external diameter (d) and said first member also known an annular resilient skirt-like scraping portion extending further axially inwardly of the solid portion with reducing thickness to a greater natural external diameter (D) to slide non-sealingly in the tube and clearing the inward end (7) of the tube in moving to the fully retracted position of the push rod to protect the packing members and the outward end of the tube against contaminants passing thereto from the actuator whilst avoiding pressure gradients during operation of the actuator.

## Patentansprüche

1. Druckluftbetätigte Membran-Betätigungseinrichtung mit einem Gehäuse (1,2), welches eine Druckkammer enthält, deren eine Wand durch eine Membran (4) gebildet ist, einer Schubplatte (10), die mit der Membran (4) zusammenarbeiten kann, und einer Schubstange (11,12,16), die mit der Schubplatte verbunden ist und sich zur Außenseite des Gehäuses über die Bohrung eines Rohres (6) erstreckt, welches ein fester Teil des Gehäuses ist, und die Schubstange in dem Rohr verschiebbar abgestützt ist durch einen ersten nicht abdichtenden Packungsteil (19) und einen zweiten nicht abdichtenden Packungsteil (20), der axial auswärts in einem Abstand von dem ersten Packungsteil liegt, wobei die Packungsteileausrichtung der Schubstange in dem Rohr schaffen und durch ringförmige Nuten direkt an der Schubstange angeordnet sind für axiale Bewegung mit dieser in dem Rohr, dadurch gekennzeichnet, daß der erste Packungsteil ein einteiliges Formstück aufweist, welches Material für Selbstschmierung enthält und mit einem sich axial erstreckenden massiven Abschnitt (22) mit vorbestimmtem Außendurchmesser (d) versehen ist und der erste Teil weiterhin einen ringförmigen federnden randartigen Schabeabschnitt hat, der sich weiter axial einwärts des massiven Abschnitts mit sich verringernder Dicke zu einem größeren natürlichen Außendurchmesser (D) erstreckt, um nicht abdichtend in dem Rohr zu gleiten und das Einwärtsende (7) des Rohres beim Bewegen zu der vollständig zurückgezogenen Position der Schubstange freizulegen, um die Packungsteile und das Auswärtsende des Rohres gegen Verunreinigungen zu schützen, die von der Betätigungseinrichtung zu diesen gelangen, während Druckgradienten während des Betriebs der Betätigungseinrichtung vermieden sind.

## Revendications

1. Vérin à diaphragme actionné par une pression d'air, comportant un carter (1, 2) contenant une chambre sous pression dont une paroi est formée par un diaphragme (4), une plaque de poussée (10) actionnée en même temps que le diaphragme (4) et une tige de poussée (11, 12, 16) reliée à celle-ci, qui s'étend à l'extérieur du carter à travers l'alésage d'un tube (6) qui est une pièce fixe du carter, et qui est supportée à coulissement dans ledit tube par un premier élément de bourrage (19) non étanche et par un second élément de bourrage (20) non étanche placé à l'extérieur de et espacé du premier élément de bourrage (19), lesdits éléments de bourrage assurant l'alignement de la tige de poussée dans le tube et étant localisés par des gorges annulaires formées directement sur la tige de poussée pour se déplacer avec celle-ci dans le tube, caractérisé en ce que ledit premier élément de bourrage est formé d'une pièce moulée incorporant un produit d'au- tolubrification et munie d'une partie solide (22) s'étendant axialement, de diamètre extérieur prédéterminé (d), ledit premier élément comprenant aussi une partie de râclage en forme de jupe élastique annulaire se développant avec une épaisseur en diminution jusqu'à un diamètre externe naturel (D) plus grand, axialement vers l'intérieur de la partie solide, pour glisser de manière non étanche dans le tube et dégager l'extrémité intérieure (7) du tube en se déplaçant jusqu'à la position complètement rétractée de la tige de poussée, pour protéger les éléments de bourrage et l'extrémité extérieure du tube de contaminants venus du vérin tout en évitant des gradients de pression pendant le fonctionnement du vérin.
